# EUROPÄISCHE PATENTSCHRIFT

(11) **EP 0 586 863 B1**
(45) Veröffentlichungstag und Bekanntmachung des Hinweises auf die Patenterteilung: **20.03.1996**
(21) Anmeldenummer: 93112121.4
(22) Anmeldetag: 29.07.1993
(51) Int. Cl.: B41F 13/20, F16C 13/02

(54) **Lagerung für Zylinder und Trommeln in Druckmaschinen**
Support for cylinders or drums in printing machines
Support pour cylindres ou tambours dans les machines d'impression

(30) Priorität: 21.08.1992 DE 4227643
(43) Veröffentlichungstag der Anmeldung: 16.03.1994
(73) Patentinhaber: MAN Roland Druckmaschinen AG, D-63075 Offenbach (DE)
(72) Erfinder: Bayer, Harald, D-63110 Rodgau (DE); Kemmerer, Klemens, D-63500 Seligenstadt (DE)
(74) Vertreter: Marek, Joachim, Dipl.-Ing.

(56) Entgegenhaltungen:
- DE-A- 1 675 088
- DE-B- 1 015 452

## Beschreibung

Die Erfindung betrifft eine Lagerung von Zylindern und Trommeln in Druckmaschinen gemäß dem Oberbegriff des Hauptanspruches.

Eine solche Lagerung ist z.B. aus der DE-AS 1 015 452 bekannt.

In der DD 278 306 A1 ist eine ähnliche Lagerung beschrieben, die einen mit dem Gestell fest verbundenen Flansch besitzt. Der Flansch nimmt den Zylinderzapfen in einem Lager auf. Auf dem Flansch ist ein weiteres Lager angeordnet, das das Antriebsrad trägt. Über eine Kupplung ist das Antriebsrad mit dem Zylinderzapfen gekoppelt.

Ein aus der DE-PS 674 128 bekanntes Lager ermöglicht es, daß der Zylinder leicht auswechselbar ist. Es sind am Zylinderzapfen zusätzlich Kupplungsglieder zur lösbaren Verbindung mit dem Antriebsrad erforderlich.

Aus der DE-PS 755 282 ist eine Zylinderlagerung bekannt, die eine Steckachse aufweist, welche den Zylinder trägt. Der Zylinder ist mit in der Gestellwand gelagerten Hülsen verflanscht, durch die die Steckachse geführt ist. Die antriebsseitig angeordnete Hülse trägt dabei das Antriebsrad.

Eine weitere Lagerung ist aus der DE 3 528 846 A1 bekannt. Hier ist die Zylinderachse starr mit der ersten Gestellwand verbunden. Die Zylinderachse ist weiterhin in einer konzentrisch angeordneten Buchse aufgenommen, die über eine Lagerbohrung in der zweiten Gestellwand drehbeweglich hindurch geführt ist. Die Buchse ist mit dem Zylinder stirnseitig verbunden und trägt am freien Achsende ein Antriebsrad.

Die oben genannten Lösungen befassen sich vorwiegend mit der verbesserten Montage und Demontage von Zylindern bzw. Trommeln in Druckmaschinen.

Die DE-AS 1 015 452 dient der Reduzierung der Durchbiegung des Zylinders, ist jedoch in der Montage bzw. Demontage aufwendig. Unterschiede im Lagerspiel von Büchse und Kugellager wirken sich ungünstig aus.

Eine montagefreundliche Lösung, die insbesondere bei mehrfach großen Zylindern/Trommeln die Durchbiegung reduziert und die erforderliche Steifigkeit im Räderzug gewährleistet wird damit nicht erreicht.

Aufgabe der Erfindung ist es somit, die im Stand der Technik oben genannten Nachteile zu beseitigen.

Gelöst wird die Aufgabe gemäß dem kennzeichnenden Teil des Hauptanspruches. Weiterbildungen der Erfindung ergeben sich aus den Unteransprüchen.

Die erfindungsgemäße Lagerung ist für Druckmaschinen mit durchgehendem als auch mit entkoppeltem Räderzug geeignet. Sie ist einsetzbar für mehrfach große Zylinder bzw. Trommeln, so z.B. für doppelt große Zylinder mit doppelt großem Antriebsrad. Durch die bevorzugte Anordnung als Festlager auf der Antriebsseite bewirkt die erfindungsgemäße Lösung neben der reduzierten Durchbiegung eine besonders hohe Steifigkeit. Das Durchmesserverhältnis von Zylinderzapfen zu Zylinderballen kann günstiger gestaltet werden. Durch die direkte Lagerung des Antriebsrades im Gestell wird der Kraft- bzw. der Momentenfluß verbessert.

Die vorliegende Lagerung für Zylinder bzw. Trommeln läßt sich durch die Verwendung von Gleit- oder Wälzlagern erreichen.

Durch die Achslänge von Zylinder bzw. Trommel von max. der lichten Weite zwischen den Gestellwänden plus der zweifachen Gestelldicke (erstes und zweites Gestell) ist die vorliegende Lösung günstig für die Montage. Die Verwendung kurzer Zylinderzapfen (Stümpfe) gestattet eine Zylinder- oder Trommelmontage sowie Demontage ohne Abschwenken der Seitengestellwände.

Die erfindungsgemäße Lösung soll an einem Ausführungsbeispiel näher erläutert werden.

Dabei zeigt:

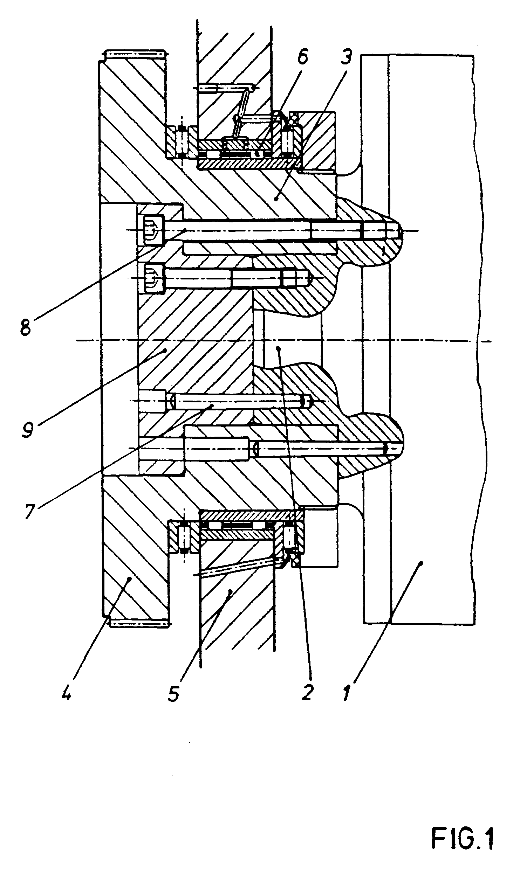

- Fig. 1: die Zylinderlagerung an der antriebsseitigen Gestellwand (Schnitt).

In der Bohrung einer antriebsseitigen Gestellwand 5 ist ein Zapfen 2 eines Zylinders 1 im Bund 3 eines Antriebsrades 4 konzentrisch aufgenommen. Der Bund 3 stellt mit dem Antriebsrad 4 eine Baueinheit dar und ist in einem Lager 6 drehbar angeordnet. Das Lager 6 ist im vorliegenden Beispiel ein Festlager und ist als Radial-Wälzlager mit zwei an der Innen- bzw. Außenseite der Gestellwand 5 angeordneten Axial-Wälzlagern ausgeführt. Das Antriebsrad 4 mit Bund 3 besitzt eine Durchgangsbohrung zur Aufnahme des Zapfens 2. Von der Außenseite der Gestellwand 5 ist eine Zentrierplatte 9 im Bund 3 stirnseitig am Zapfen 2 angeordnet und mittels Schrauben 8 und Stifte 7 mit dem Bund 3 und dem Zapfen 2 verbunden. Die Zentrierplatte 9 dient zur Positionierung des Zylinders 1 und zur Drehmomentübertragung von Antriebsrad 4 auf den Zylinder 1.

Die Achslänge von Zylinder 1, einschließlich der Zapfen 2, entspricht der lichten Weite zwischen den Gestellwänden 5 plus der halben Gestelldicke pro Gestellwand 5.

In der nicht gezeigten zweiten Gestellwand (bedienseitig) ist der zweite Zapfen 2 des Zylinders 1 in einem Loslager aufgenommen.

### Bezugszeichenliste

- 1: Zylinder
- 2: Zapfen
- 3: Bund
- 4: Antriebsrad
- 5: Gestellwand
- 6: Lager
- 7: Stift
- 8: Schraube
- 9: Zentrierplatte

## Patentansprüche

1. Lagerung für Zylinder und Trommeln in Druckmaschinen, die beidseitig in Gestellwänden abgestützt sind und deren Antriebsräder mit dem Zapfen der Zylinder und Trommeln gekoppelt sind, wobei der Zapfen (2) des Zylinders (1) im Bund (3) eines Antriebsrades (4) konzentrisch aufgenommen ist,
**dadurch gekennzeichnet**,
daß der Bund (3) in der Gestellwand (5) in einem Lager (6) drehbar angeordnet und lösbar formschlüssig mit dem Zapfen (2) verbunden ist.

2. Lagerung nach Anspruch 1,
**dadurch gekennzeichnet**,
daß der Bund (3) lösbar formschlüssig mit dem Zylinder (1) verbunden ist.

3. Lagerung nach Anspruch 1,
**dadurch gekennzeichnet**,
daß die Achslänge von Zylinder (1), einschließlich seiner Zapfen (2), maximal der lichten Weite zwischen den Gestellwänden (5) plus der zweifachen Gestelldicke entspricht.

4. Lagerung nach Anspruch 1,
**dadurch gekennzeichnet**,
daß eine im Bund (3) angeordnete Zentrierplatte (9) stirnseitig lösbar formschlüssig mit dem Zapfen (2) verbunden ist.

5. Lagerung nach Anspruch 2,
**dadurch gekennzeichnet**,
daß eine Zentrierplatte (9) mit dem Bund (3) und dem Zylinder (1) stirnseitig lösbar formschlüssig verbunden ist.

6. Lagerung nach Anspruch 1,
**dadurch gekennzeichnet**,
daß der Bund (3) in einem Gleitlager aufgenommen ist.

7. Lagerung nach Anspruch 1,
**dadurch gekennzeichnet**,
daß der Bund (3) in einem Wälzlager aufgenommen ist.

8. Lagerung nach Anspruch 1,
**dadurch gekennzeichnet**,
daß das Lager (6) antriebsseitig als Festlager ausgebildet ist.

## Claims

1. Support for cylinders and drums in printing presses which are supported on both sides in frame walls and the drive wheels of which are coupled with the trunnions of the cylinders and drums, wherein the trunnion (2) of the cylinder (1) is concentrically received in the collar (3) of a drive wheel (4),
characterised in that,
the collar (3) is arranged rotatably in a bearing (6) in the frame wall (5) and is releasably connected positively with the trunnion (2).

2. Support according to Claim 1,
characterised in that,
the collar (3) is releasably positively connected with the cylinder (1).

3. Support according to Claim 1,
characterised in that,
the axial length of cylinder (1), including its trunnions (2), corresponds at most to the clear width between the frame walls (5) plus twice the frame thickness.

4. Bearing according to Claim 1,
characterised in that,
a centering plate (9) arranged in the collar (3) is positively releasably connected with the trunnion (2) at its end face.

5. Bearing according to Claim 2,
characterised in that the centering plate (9) is positively releasably connected with the collar (3) and to the cylinder (1) at its end face.

6. Support according to Claim 1,
characterised in that the collar (3) is received in a sliding bearing.

7. Support according to Claim 1,
characterised in that the collar (3) is received in a roller bearing.

8. Support according to Claim 1,
characterised in that the bearing (6) on the drive side is constructed as fixed bearing.

## Revendications

1. Support pour des cylindres et tambours dans des machines d'impression, qui sont supportés, des deux côtés, dans des parois de bâti et dont les roues d'entraînement sont couplées au tourillon des cylindres et tambours, le tourillon (2) du cylindre (1) étant reçu, de façon concentrique, dans le corps (3) d'une roue d'entraînement (4),
caractérisé en ce que le corps (3) est agencé de façon rotative, dans la paroi de bâti (5), dans un palier (6) et relié mécaniquement au tourillon (2) de façon amovible.

2. Support selon la revendication 1,
caractérisé en ce que le corps (3) est relié mécaniquement au cylindre (1) de façon amovible.

3. Support selon la revendication 1,
caractérisé en ce que l'axe longitudinal du cylindre (1), y compris son tourillon (2), correspond au maximum à la largeur intérieure entre les parois de bâti (5) plus le double de l'épaisseur du bâti.

4. Support selon la revendication 1,
caractérisé en ce qu'une plaque de centrage (9) agencée dans le corps (3) est reliée, frontalement, mécaniquement au tourillon (2) de façon amovible.

5. Support selon la revendication 2,
caractérisé en ce qu'une plaque de centrage (9) est reliée mécaniquement, de façon amovible, frontalement au corps (3) et au cylindre (1).

6. Support selon la revendication 1,
caractérisé en ce que le corps (3) est reçu dans un palier glissant.

7. Support selon la revendication 1,
caractérisé en ce que le corps (3) est reçu dans un palier à roulement.

8. Support selon la revendication 1,
caractérisé en ce que le palier (6) est réalisé, du côté de l'entraînement, comme palier fixe.
